# EUROPEAN PATENT SPECIFICATION

(11) **EP 0 611 907 B1**
(45) Date of publication and mention of the grant of the patent: **29.10.1997**
(21) Application number: 93120147.9
(22) Date of filing: 14.12.1993
(51) Int. Cl.: F16K 15/03

(54) **Fluid check valve with replaceable valve seat and flapper assembly**
Rückschlagventil mit austauschbarer Ventilsitz- und Klappeneinheit
Soupape de retenue avec unité de siège et de clapet remplaçable

(30) Priority: 19.02.1993 US 19832; 16.09.1993 US 121432
(43) Date of publication of application: 24.08.1994
(73) Proprietor: Muddiman, Robert W., Oakville, Ontario L6K 2G4 (CA)
(72) Inventor: Muddiman, Robert W., Oakville, Ontario L6K 2G4 (CA)
(74) Representative: TER MEER STEINMEISTER & PARTNER GbR

(56) References cited:
- DE-A- 3 001 461
- DE-A- 3 001 501
- GB-A- 2 264 161
- US-A- 1 871 536
- US-A- 1 926 759
- US-A- 3 072 141
- US-A- 4 694 853

## Description

This invention relates to a fluid check valve according to the preamble of claim 1 and to a replaceable valve seat and flapper assembly according to the preamble of claim 5.

In previous types of double-flapper check valves, hinge and stop pins are installed through holes which extend through the wall of the Valve body. After installation of the pins, the holes are sealed by plugs or other means. While initially effective, there is a possibility of leakage from the inside to the outside past the seals.

Another disadvantage of the previous designs is that the flappers are free to move sideways in the bore. This sideways movement causes extra wear on the wall of the flapper hinge or bushing, depending upon actual design.

One modification made to avoid holes through the wall is to mount pins in inserts which fit into cavities machined into the inner surface of the body wall. These inserts are retained in place by various means. U.S. Patent 4,694,853 describes and illustrates the various embodiments in which hinge pins and stop pins are mounted in insert position in recesses in the body wall.

Although holes through the body wall are eliminated, and thus also potential leak paths, the modifications using inserts are expensive to manufacture and the design can restrict the particular type of gasket that can be used. Thinning of the wall occurs, which is not desirable. Also, the holes through the inserts for the hinge pins are round and permit sideways movement of the hinge pins which causes wear and increased maintenance.

Another fluid check valve known from DE-A-30 01 461 comprises a tubular valve body, a seat ring and keepers for pivotally mounting flappers on the seat ring. The keepers which extend axially from the seat ring are integrally formed with the seat ring.

To secure the seat ring in its position in the body first and second grooves are provided in the mating surfaces of the seat ring and the valve body. An annular holding element is arranged between the body and the seat ring within both the first and second grooves.

The object of the present invention is to provide a fluid check valve as well as a valve seat and flapper assembly for a fluid check valve of the initially named kind which can be easily and economically manufactured and maintained.

This object is achieved by the check valve according to claim 1 and the valve seat and flapper assembly according to claim 5.

The separate retaining ring, clamping the seat ring down against a ledge in the valve body, makes it possible to easily insert the seat ring and flapper assembly into the valve body and to removed it therefrom.

The seat can readily be machined, prior to insertion, and also the seat can be refinished if worn, after removing. Different metals can be used for the valve body and for the seat, providing the ability to use special materials for the valve seat.

The invention will be readily understood by the following description of certain embodiments, by way of example, in conjunction with the accompanying drawings, in which:
Figure 1 is a sectioned, exploded perspective view of one form of valve in accordance with the invention;
Figure 2 is a side view of a seat ring, showing the keeper mounting formation;
Figure 3 is a cross-section on the line 3-3 of Figure 2; and
Figure 4 is a longitudinal cross-section of an assembled valve, of the form of Figures 1 to 3;
Figure 5 is a cross-section of part of a seat ring and retaining ring, illustrating an alternative form of attachment of the retaining ring to the seat ring.

As illustrated in the drawings, a check valve comprises a tubular body 10 with a forward end 12 and a rearward end 14. The flow is normally in the direction of the arrow A.

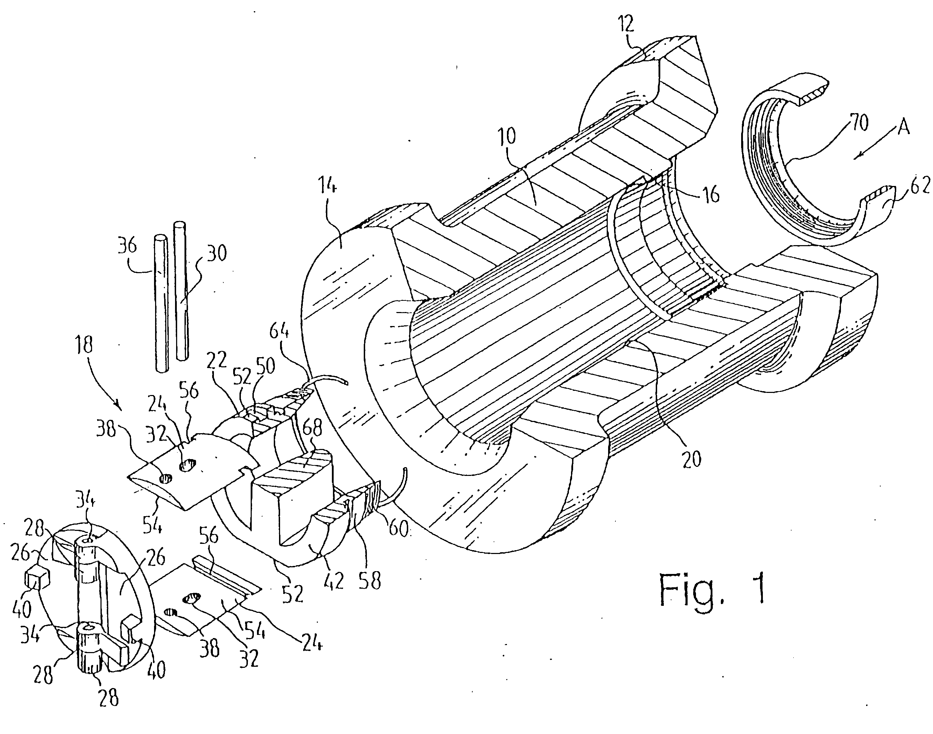

In the example as illustrated in Figures 1 to 4, adjacent the forward end 12 is an annular rib 16. A flapper and seat assembly, indicated generally at 18 in Figure 1, is a sliding fit in the bore 20 of the body 10. The assembly 18 comprises a seat ring 22, two keepers 24, two flappers 26, having aligned hinged portions 28, and a hinge pin 30. The hinge pin passes through bores 32 in the keepers 24 and through bores 34 in the hinge portions 28. The bores 32 are elongate in the direction of the longitudinal axis of the valve, and have a transverse dimension such that the hinge pin can slide in the elongate slots, but not move sideways. This elongation has a length such that it enables the hingepin, and thus the flappers to move downstream, but the flappers are prevented from moving sideways. This downstream but not sideways movement reduces wear and damage (and hence maintenance) of the seat surfaces and walls. Alternatively the bores 34 in the hinge portions 28 in the flappers 26 can be elongated in the direction of the valve axis, while the bores 32 in the keepers 24 are round with no extra clearance. This alternative also allows the flappers to move downstream off the seat before opening. Another option is to have both bores 32 in the keepers and bores 34 in the flappers slightly elongated such that the combined elongation gives the desired axial movement.

A stop pin 36 can also be provided, extending through bores 38 in the keepers 24, to limit opening of each flapper. Alternatively, or in addition, stop members 40 can be provided on the flappers 26. The seat ring 22 has a valve seating 42.

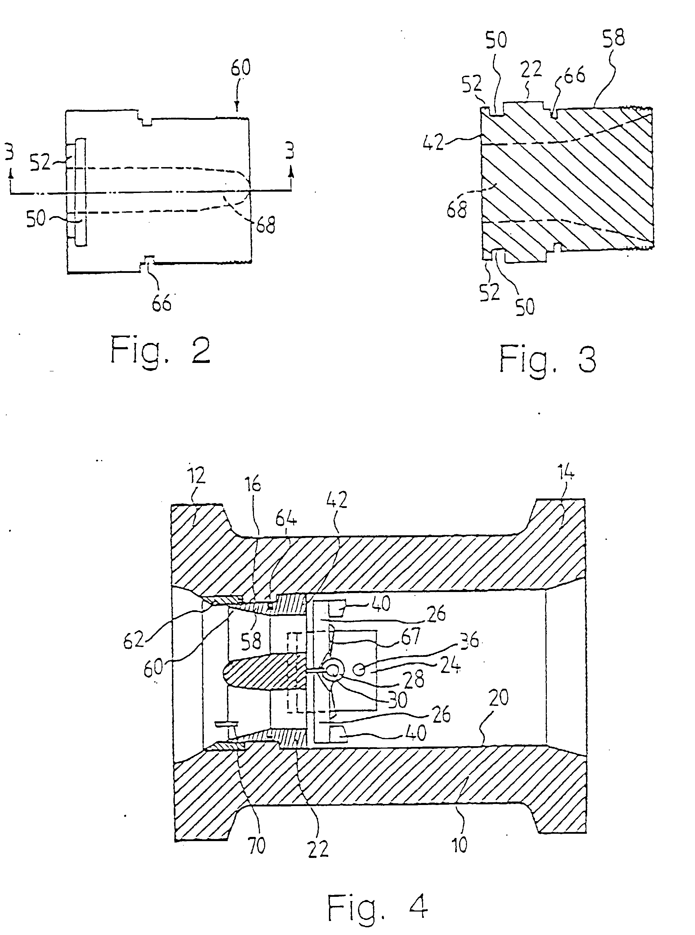

As can be particularly seen in the embodiments illustrated in Figures 2 and 3, but is also shown in Figure 1, the seat ring 22 has two flat surfaces 50 diametrically opposed on the main body of the seat ring. A rib 52 extends on each surface 50, the ribs extending transversely to the axis of the valve. Each keeper has a somewhat segmental form, the flat surface 54 of each keeper cooperating with a surface 50. A groove 56 on each surface 54 receives the rib 52.

Extending axially from the main body of the seat ring, is an annular skirt 58. The skirt 58 extends within the annular rib 16 in the bore on the body 10, and has an externally threaded end portion 60. An internally threaded retainer ring 62 screws onto the threaded portion 60. An O-ring 64 fits in a groove 66. A light spring 67 acts on the flappers, urging them to a closed position, the flappers urged to an open position by the normal flow through the valve. If a reverse flow occurs, the flappers shut against the seating 42.

A transverse member 68 is normally provided extending from the seat level and is aligned with the flat surface 50, and with the hinge pin 30. After the retaining ring has been tightened onto the skirt 58 of the seat ring, a hole can be drilled and a pin 70 inserted, in the interengaging threads to lock the retaining ring in position.

To assemble the valve, the O-ring 64 is positioned in the groove 66 and the keepers 24 are slid into position on the surfaces 50. The flappers are positioned on the seat ring between the keepers and the hinge pin inserted and also the stop pin if provided. The assembly is then slid into the bore 20 of the body until it rests on the rib 16. The retaining ring is screwed onto the seat ring, and the lock pin 70 then inserted. Holes can be formed in the outer end of the retaining ring for use by a tool for tightening the ring.

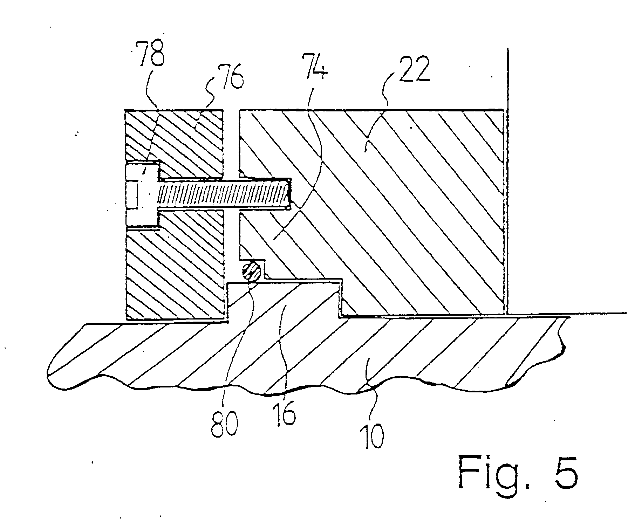

Figure 5 illustrates an alternative arrangement of seating ring and retaining ring, common reference numerals applied where applicable. As in Figures 1 to 4, the valve body 10 has an annular rib 16. The valve seat has a reduced diameter portion 74. The portion 74 extends axially a distance slightly less than the axial width of the rib 16. A separate retainer ring 76, a sliding fit in the valve body, rests against the rib 16 on the side opposite to that of the seat ring 22. A series of screws 78, for example socket head cap screws, extend through bores in the retainer ring into threaded holes in the seat ring. Tightening the screws clamps the seat ring to the rib. A seal 80 can be provided.

As previously mentioned, the provision of a removable and replaceable seat ring has various advantages. For example, a special material which is more suitable for a valve seat can be used for this member while a more economic conventional material can be used for the main valve body. Also the valve seating surface can be very easily machined prior to insertion in the valve body, and if wear occurs on the valve seating then the member can be removed and the seating surface remachined. Also in event of other damage then the whole member can be removed and a new member inserted without the loss of the main valve body. Also there are no holes through the valve body for mounting the flappers nor are there are inserts machined into the valve body.

## Claims

1. A fluid check valve comprising:
- a check valve body (10) having a bore (20); and
- a replaceable valve seat and flapper assembly (18) positioned in said bore (20); said valve seat and flapper assembly (18) comprising:
- a tubular seat ring (22) having an annular seat surface (42) at one end and being sliding fit in said bore (20);
- a pair of diametrically opposed keepers (24) extending axially from said seat surface (42); and
- a pair of substantially semi-circular flappers (26) positioned between said keepers (24), and a pivot pin (30) pivotally mounting said flappers (26) on said keepers (24), each flapper (26) including a seat surface for engaging with said seat surface (42) on said seat ring (22) when in a closed position;
**characterized,** in that
- said check valve body (10) has an annular fixed rib (16) in said bore (20), said rib (16) having opposed surfaces;
- said tubular seat ring (22) has a reduced diameter portion (58) at the end remote from said seat surface (42) and an annular rib positioned against one side of said annular fixed rib (16);
- a removable retaining ring (62, 76) is positioned on said reduced diameter portion (58) of said seat ring (22), said retaining ring (62, 76) abutting against the other side of said annular fixed rib (16) when tightened onto said seat ring (22);
- said tubular seat ring (22) has a pair of diametrically opposed flat surfaces (50) on its external surface adjacent said seat surface (42); and
- each of said keepers (24) has a flat surface positioned on one of said flat surfaces (50) of said seat ring (22).

2. The check valve of claim 1, **characterized**, in that said retaining ring (62) tightens onto said seat ring (22) by mating screw threads on the retaining ring (62) and the seat ring (22).

3. The check valve of claim 1, **characterized,** in that said retaining ring (76 ) tightens onto said seat ring (22) by screw threaded fasteners (78).

4. The check valve of claim 1, **characterized** by means (70) for locking said retaining ring (62) to said seat ring (22) in a tightened position.

5. A replaceable valve seat and flapper assembly (18) for a fluid check valve, in particular for a check valve as claimed in anyone of the preceding claims, comprising:
- a substantially tubular seat ring (22) having an annular seat surface (42) at one end and having mounting means (58, 60, 62, 70; 74, 76, 78) to enable mounting in a bore (20) of the check valve when in position;
- a pair of diametrically opposed keepers (24) extending axially from said seat surface (42); and
- a pair of substantially semi-circular flappers (26) positioned between and pivotally mounted on said keepers (24), each flapper (26) including a seat surface for engaging with said seat surface (42) on said seat ring (22) when in a closed position;
**characterized,** in that
- said tubular seat ring (22) has a pair of diametrically opposed flat surfaces (50) on its external surface adjacent said seat surface (42); and
- each of said keepers (24) has a flat surface positioned on one of said flat surfaces (50) of said seat ring (22)
- wherein said keepers (24) are held in their positions on said tubular seat ring (22) when the assembly being sliding fit in said bore (20).

6. The replaceable assembly of claim 5, **characterized** by means (36, 40) to limit opening of each flapper (26) to approximately 90°.

7. The replaceable assembly of claim 5 or 6, **characterized** by a pivot pin (30) passing between the keepers (24) and through aligned hinge bores (34) in the flappers (26).

8. The replaceable assembly of claim 7, **characterized** in that
- said pivot pin (39) passes through holes (32, 34) in said keepers (24) and said flappers (26) to form a hinge, and
- said holes (32, 34) in said keepers (24) or said flappers (26) or both are elongated in cross-section to allow movement of the flappers (26) parallel to the valve axis.

9. The replaceable assembly of anyone of the claims 5 to 8, **characterized** by means (67) urging said flappers (26) to a closed position.

## Patentansprüche

1. Rückschlagventil mit:
- einem Ventilkörper (10) mit einer Bohrung (20) und
- einer in der Bohrung (20) angeordneten austauschbaren Ventilsitz- und Klappeneinheit (18). die folgendes umfaßt:
- einen rohrförmigen Sitzring (22) mit einer ringförmigen Sitzfläche (42) an einem Ende, der gleitend in die Bohrung (20) eingefügt ist.
- ein Paar von einander diametral gegenüber angeordneten Haltern (24), die sich axial von der Sitzfläche (42) wegerstrecken, und
- ein Paar von im wesentlichen halbkreisförmigen Klappen (26), die zwischen den Haltern (24) angeordnet sind, und einen Schwenkstift (30). mit dem die Klappen (26) schwenkbar an den Haltern (24) befestigt sind, wobei jede Klappe (26) eine Sitzfläche aufweist. die in einer geschlossenen Stellung mit der Sitzfläche (42) am Sitzring (22) in Eingriff ist, **dadurch gekennzeichnet,** daß
- der Ventilkörper (10) in der Bohrung (20) eine ringförmige feste Rippe (16) aufweist, die gegenüberliegende Oberflächen besitzt.
- der rohrförmige Sitzring (22) an dem von der Sitzfläche (42) abgewandten Ende einen Abschnitt (58) mit reduziertem Durchmesser und eine ringförmige Rippe aufweist, die gegen eine Seite der ringförmigen festen Rippe (16) positioniert ist,
- auf dem Abschnitt (58) mit reduziertem Durchmesser ein entfernbarer Rückhaltering (62, 76) angeordnet ist, der gegen die andere Seite der ringförmigen festen Rippe (16) anstößt, wenn er auf dem Sitzring (22) festgezogen ist,
- der ringförmige Sitzring (22) ein Paar von einander diametral gegenüberliegenden flachen Flächen auf seiner äußeren Oberfläche benachbart zur Sitzfläche (42) aufweist, und
- jeder der Halter eine flache Fläche aufweist, die auf einer der flachen Flächen (50) des Sitzrings (22) angeordnet ist.

2. Rückschlagventil nach Anspruch 1, **dadurch gekennzeichnet,** daß der Rückhaltering (62) mittels aneinander angepaßter Schraubgewinde auf dem Rückhaltering (22) und dem Sitzring (22) festgezogen ist.

3. Rückschlagventil nach Anspruch 1, **dadurch gekennzeichnet,** daß der Rückhaltering (76) auf dem Sitzring (22) mittels mit Schraubgewinden versehenen Befestigern (78) festgezogen ist.

4. Rückschlagventil nach Anspruch 1, **gekennzeichnet durch** Mittel (70) zum Verriegeln des Rückhalterings (62) auf dem Sitzring (22) in einer festgezogenen Stellung.

5. Austauschbare Ventilsitz- und Klappeneinheit (18) für ein Rückschlagventil, insbesondere für ein Rückschlagventil nach einem der vorstehenden Ansprüche, mit:
- einem im wesentlichen rohrförmigen Sitzring (22) mit einer ringförmigen Sitzfläche (42) an einem Ende und mit Befestigungsmitteln (58, 60, 62, 70; 74, 76, 78), zum Ermöglichen einer Befestigung in einer Bohrung (20) des Rückschlagventils,
- einem Paar von einander diametral gegenüberliegenden Haltern (24), die sich axial von der Sitzfläche (42) wegerstrecken, und
- einem Paar von im wesentlichen halbkreisförmigen Klappen (26), die zwischen den Haltern (24) angeordnet und schwenkbar daran befestigt sind, wobei jede der Klappen (26) eine Sitzfläche umfaßt, die in einer geschlossenen Stellung mit der Sitzfläche (42) am Sitzring (22) in Eingriff ist, **dadurch gekennzeichnet,** daß
- der rohrförmige Sitzring (22) ein Paar von einander diametral gegenüberliegenden flachen Flächen (50) auf seiner äußeren Oberfläche benachbart zur Sitzfläche (42) aufweist, und
- jeder der Halter (24) eine auf einer der flachen Flächen (50) des Sitzrings (22) angeordnete flache Fläche aufweist,
- wobei die Halter (24) in ihren Stellungen auf dem rohrförmigen Sitzring (22) gehalten werden, wenn die Einheit gleitend in die Bohrung (20) eingefügt ist.

6. Austauschbare Einheit nach Anspruch 5, **gekennzeichnet durch** Mittel (26,40) zum Begrenzen der Öffnung jeder Klappe (26) auf annährend 90°.

7. Austauschbare Einheit nach Anspruch 5 oder 6, **gekennzeichnet durch** einen Schwenkstift (30). der zwischen den Haltern (24) und durch ausgerichtete Scharnierbohrungen (34) in den Klappen (26) hindurch geht.

8. Austauschbare Einheit nach Anspruch 7, **dadurch gekennzeichnet,** daß
- der Schwenkstift (39) durch Löcher (32, 34) in den Haltern (24) und den Klappen (26) hindurch geht, um ein Scharnier zu bilden, und
- die Bohrungen (32, 34) in den Haltern (24) oder den Klappen (26) oder beiden im Querschnitt verlängert sind, um eine Bewegung der Klappen (26) parallel zur Ventilachse zu gestatten.

9. Austauschbare Einheit nach einem der Ansprüche 5 bis 8, **gekennzeichnet durch** Mittel (67), die die Klappen (26) in eine geschlossene Stellung treiben.

## Revendications

1. Une valve de retenue ou clapet anti-retour pour fluide, comprenant :
- un corps de valve de retenue (10) présentant un alésage (20) ; et
- un ensemble amovible (18) de siège de valve et de clapet, positionné dans ledit alésage (20); ledit ensemble (18) de siège de valve et de clapet comprenant:
- une bague tubulaire de siège (22) qui présente une surface annulaire de siège (42) à l'une de ses extrémités et qui est montée coulissante de façon ajutée dans ledit alésage (20);
- deux organes de maintien (24) diamétralement opposés et s'étendant axialement à partir de ladite surface de siège (42); et
- deux clapets (26) sensiblement semi-circulaires et positionnés entre lesdits organes de retenue (24) et une broche de pivot (30) assurant le montage pivotant desdits clapets (26) sur lesdits organes de retenue (24), chaque clapet (26) comprenant une surface de siège destinée à venir en contact avec ladite surface de siège (42) sur ladite bague de siège (22) lorsqu'elle est en position fermée;
caractérisé en ce que
- ledit corps de valve de retenue (10) comporte une nervure annulaire fixe (16) dans ledit alésage (20), ladite nervure (16) présentant des surfaces opposées;
- ladite bague tubulaire de siège (22) présente une partie de diamètre réduit (58) à son extrémité située à distance de ladite surface de siège (42) et une nervure annulaire positionnée contre une face de ladite nervure annulaire fixe (16);
- une bague amovible de retenue (62, 76) est positionnée sur ladite partie de diamètre réduit (58) de ladite bague de siège (22), ladite bague de retenue (62, 76) venant en butée contre l'autre face de ladite nervure annulaire fixe (16) lorsqu'elle est serrée sur ladite bague de siège (22);
- ladite bague tubulaire de siège (22) comporte deux surfaces planes diamétralement opposées (50) sur sa surface extérieure adjacente à ladite surface de siège (42); et
- chacun desdits organes de maintien (24) comporte une surface plane positionnée sur l'une desdites surfaces planes (50) de ladite bague de siège (22).

2. La valve de retenue selon la revendication 1, caractérisée en ce que ladite bague de retenue (62) est serrée sur ladite bague de siège (22) par des filetages se vissant réciproquement l'un dans l'autre et prévus sur la bague de retenue (62) et sur la bague de siège (22).

3. La valve de retenue selon la revendication 1. caractérisée en ce que ladite bague de retenue (76) est serrée sur ladite bague de siège (22) par des organes de fixation filetés (78).

4. La valve de retenue selon la revendication 1, caractérisée par des moyens (70) pour bloquer ladite bague de retenue (62) sur ladite bague de siège (22) d'une façon serrée.

5. Un ensemble amovible (18) de siège de valve et de clapet pour une valve de retenue pour fluide, en particulier pour une valve de retenue telle que revendiquée dans l'une quelconque des revendications précédentes, comprenant:
- une bague de siège sensiblement tubulaire (22) comportant une surface de siège annulaire (32) à l'une de ses extrémités ainsi que des moyens de montage (58, 60, 62, 70; 74, 76, 78) pour permettre le montage en position dans un alésage (20) de la valve de retenue;
- deux organes de maintien (24) diamétralement opposés et s'étendant axialement à partir de ladite surface de siège (42); et
- deux clapets sensiblement semi-circulaires (26) positionnés entre lesdits organes de retenue (24) et montés pivotants sur lesdits organes de retenue (24), chaque clapet (26) comprenant une surface de siège destinée à venir en contact avec ladite surface de siège (42) sur ladite bague de siège (22) lorsqu'elle est en position fermée;
caractérisé en ce que :
- ladite bague tubulaire de siège (22) comporte deux surfaces planes diamétralement opposées (50) sur sa surface extérieure adjacente à ladite surface de siège (42); et
- chacun desdits organes de maintien (24) présente une surface plane positionnée sur l'une desdites surfaces plates (50) de ladite bague de siège (22),
- dans lequel lesdits organes de retenue (24) sont maintenus dans leurs positions sur ladite bague tubulaire de siège (22) lorsque l'on fait coulisser l'ensemble de façon ajustée l'ensemble dans ledit alésage (20).

6. L'ensemble amovible selon la revendication 5, caractérisé par des moyens (36, 40) pour limiter l'ouverture de chaque clapet (26) à approximativement 90°.

7. L'ensemble amovible selon la revendication 5 ou 6, caractérisé par une broche de pivot (30) passant entre les organes de retenue (24) et à travers les alésages de charnière alignés (34) dans les clapets (26).

8. L'ensemble amovible selon la revendication 7, caractérisé en ce que:
- ladite broche de pivot (39) traverse des trous (32, 34) dans lesdits organes de maintien (24) et lesdits clapets (26), pour former une charnière, et
- lesdits trous (32, 34) dans lesdits organes de retenue (24) ou lesdits clapets (26), ou les deux, présentent une section transversale allongée afin de permettre le déplacement des clapets (26) parallèlement à l'axe de la valve.

9. L'ensemble amovible selon l'une quelconque des revendications 5 à 8, caractérisé par des moyens (67) sollicitant lesdits clapets (26) vers une position fermée.
